(19)

Europäisches
Patentamt

European
Patent Office

Office européen
des brevets

(11) **EP 4 148 832 A1**

(12) **EUROPEAN PATENT APPLICATION**
published in accordance with Art. 153(4) EPC

(43) Date of publication:
**15.03.2023 Bulletin 2023/11**

(21) Application number: **21935934.6**

(22) Date of filing: **05.04.2021**

(51) International Patent Classification (IPC):
**H01M 4/587** (2010.01)     **H01M 10/0566** (2010.01)

(52) Cooperative Patent Classification (CPC):
**H01M 4/587; H01M 10/0566**

(86) International application number:
**PCT/JP2021/014523**

(87) International publication number:
**WO 2022/215126 (13.10.2022 Gazette 2022/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Showa Denko Materials Co., Ltd.**
**Tokyo 100-6606 (JP)**

(72) Inventors:
• **TSUCHIYA, Hideyuki**
  **Tokyo 100-6606 (JP)**
• **SUGA, Keita**
  **Tokyo 100-6606 (JP)**

(74) Representative: **Berggren Oy**
**P.O. Box 16**
**Eteläinen Rautatiekatu 10A**
**00101 Helsinki (FI)**

(54) **NEGATIVE ELECTRODE MATERIAL FOR LITHIUM-ION SECONDARY BATTERY, NEGATIVE ELECTRODE FOR LITHIUM-ION SECONDARY BATTERY, AND LITHIUM-ION SECONDARY BATTERY**

(57)     An anode material for a lithium-ion secondary battery, includes a carbon material satisfying the following (1) and (2):
(1) D90/D10 of a particle size on a volume basis is larger than 2.0 and less than 4.3;
(2) N/S, which is a value obtained by dividing a number N of particles with an equivalent circle diameter of 5 $\mu$m or less based on a number standard in a total number of measured particles of 10,000, by a specific surface area S determined by nitrogen adsorption measurement at 77 K, is 750 (particles $\cdot$ g/cm$^2$) or more.

EP 4 148 832 A1

**Description**

Technical Field

The present invention relates to an anode material for a lithium-ion secondary battery, an anode for a lithium-ion secondary battery, and a lithium-ion secondary battery.

Background Art

A lithium-ion secondary battery has been widely used in electronic devices, such as a laptop personal computer (PC), a mobile phone, a smartphone, and a tablet PC, taking advantage of its characteristics of small size, light weight, and high energy density. In recent years, in the context of environmental problems such as global warming due to $CO_2$ emissions, a clean electric vehicle (EV) that runs solely on the battery, a hybrid electric vehicle (HEV) or a plug-in hybrid electric vehicle (PHEV) that combines a gasoline engine and the battery, and the like have become widespread. Development of a lithium-ion secondary battery (lithium-ion secondary battery for vehicle) as a battery to be mounted on these vehicles is underway.

The performance of an anode material for a lithium-ion secondary battery greatly affects the characteristics of a lithium-ion secondary battery. A carbon material is widely used as the material for an anode material for a lithium-ion secondary battery. The carbon material used as an anode material is roughly divided into a graphite and a carbon material with a crystallinity lower than graphite (amorphous carbon, and the like). The graphite has a structure in which hexagonal planes of carbon atoms are regularly stacked, and when it is used as an anode material of a lithium-ion secondary battery, an insertion or elimination reaction of a lithium-ion proceeds at the edge of a hexagonal plane to perform charge or discharge.

Amorphous carbon has irregularly stacked hexagonal planes, or does not have hexagonal planes. Therefore, in an anode material using amorphous carbon, an insertion or elimination reaction of lithium-ions proceeds on the entire surface of the anode material. Therefore, a lithium-ion battery superior in input-output characteristics can be obtained more easily than a case where graphite is used as an anode material (see, for example, Patent Document 1 and Patent Document 2). On the other hand, since amorphous carbon is less crystalline than graphite, its energy density is lower than graphite.

Citation List

Patent Documents

[Patent Document 1] Japanese Patent Application Laid-Open (JP-A) No. H4-370662
[Patent Document 2] JP-A No. H5-307956
[Patent Document 3] International Publication No. WO 2012/015054

SUMMARY OF INVENTION

Technical Problem

Considering the aforedescribed characteristics of a carbon material, an anode material has also been proposed in which amorphous carbon and graphite are complexed to improve input-output characteristics while maintaining the high energy density, and graphite is coated with amorphous carbon to reduce the surface reactivity to improve the input-output characteristics while favorably maintaining the initial charge and discharge efficiency (see for example, Patent Document 3).

A lithium-ion secondary battery to be used in an EV, a HEV, or the like is required to have high energy density from the viewpoint of driving comfortability, longer continuous running distance, or the like. A lithium-ion secondary battery having high energy density is required to shorten the charging time. In order to shorten the charging time of the lithium-ion secondary battery, it is necessary to increase the current density. However, in a case where the current density is increased in order to charge the lithium-ion secondary battery in a short time, lithium deposition is likely to occur at an anode, and input characteristics, cycle characteristics, or the like tends to deteriorate.

Since it is possible to increase the energy density of a lithium-ion secondary battery by increasing the amount of lithium-ions that can be charged and discharged, increasing the thickness of an anode is being studied. However, when trying to achieve high energy density in a lithium-ion secondary battery by increasing the thickness of an anode, the capacity is high at the beginning of the charge and discharge cycle, but as the charge and discharge cycle is repeated, an SEI (Solid Electrolyte Interphase) film gradually grows. Thereby, the gaps in the anode are blocked, the mobility of lithium-ions is impaired, and as a result, the cycle characteristics tend to deteriorate.

In one aspect of the present invention, the object is to provide an anode material for a lithium-ion secondary battery and an anode for a lithium-ion secondary battery capable of manufacturing a lithium-ion secondary battery excellent in input-output characteristics and cycle characteristics.

Further, in one aspect of the present invention, the object is to provide a lithium-ion secondary battery excellent in input-output characteristics and cycle characteristics.

Solution to Problem

The specific means to solve the above problems include the following aspects.

<1> An anode material for a lithium-ion secondary battery, the anode material comprising a carbon material satisfying the following (1) and (2):

(1) D90/D10 of a particle size on a volume basis is larger than 2.0 and less than 4.3;
(2) N/S, which is a value obtained by dividing a number N of particles with an equivalent circle diameter of 5 $\mu$m or less based on a number standard in a total number of measured particles of 10,000, by a specific surface area S determined by nitrogen adsorption measurement at 77 K, is 750 (particles $\cdot$ g/cm$^2$) or more.

<2> The anode material for a lithium-ion secondary battery according to <1>, wherein the carbon material satisfies the following (3):
(3) a ratio of a number of particles with an equivalent circle diameter of 5 $\mu$m or less based on a number standard with respect to a total number of measured particles of 10,000 is 45% or more.
<3> The anode material for a lithium-ion secondary battery according to <1> or <2>, wherein the carbon material satisfies the following (4):
(4) when X is an equivalent circle diameter based on a number standard at a cumulative percentage of 99% of a particle size distribution limited to particle sizes of 5 $\mu$m or more, and Y is a circularity at a cumulative percentage of 1% of a circularity distribution limited to particle sizes of 5 $\mu$m or more, the following Formula (a) is satisfied:

$$\text{Formula (a): } Y \geq 0.3 \times \log_{10}(X) + (0.5 - 0.3 \times \log_{10} 6).$$

<4> The anode material for a lithium-ion secondary battery according to any one of <1> to <3>, wherein the carbon material satisfies the following (5):
(5) a tap density is from 0.8 g/cm$^3$ to 0.95 g/cm$^3$.
<5> The anode material for a lithium-ion secondary battery according to any one of <1> to <4>, wherein the carbon material satisfies the following (6):
(6) an average circularity is from 0.90 to 0.93.
<6> The anode material for a lithium-ion secondary battery according to any one of <1> to <5>, wherein an average interplanar spacing $d_{002}$ determined by an X-ray diffraction method of the carbon material is from 3.34 Å to 3.38 Å.
<7> The anode material for a lithium-ion secondary battery according to any one of <1> to <6>, wherein an R value from Raman spectrometry on the carbon material is from 0.1 to 0.4.
<8> The anode material for a lithium-ion secondary battery according to any one of <1> to <7>, wherein a specific surface area S determined by nitrogen adsorption measurement at 77 K of the carbon material is 14 m$^2$/g or less.
<9> The anode material for a lithium-ion secondary battery according to any one of <1> to <8>, wherein the carbon material does not have two or more exothermic peaks in a temperature range of from 300°C to 1000°C in a differential thermal analysis in an air stream.
<10> An anode for a lithium-ion secondary battery, comprising an anode material layer including the anode material for a lithium-ion secondary battery according to any one of <1> to <9>, and a current collector.
<11> A lithium-ion secondary battery, comprising the anode for a lithium-ion secondary battery according to <10>, a cathode, and an electrolytic solution.

Advantageous Effects of Invention

In one aspect of the present invention, an anode material for a lithium-ion secondary battery and an anode for a lithium-ion secondary battery capable of manufacturing a lithium-ion secondary battery excellent in input-output characteristics and cycle characteristics can be provided.

Further, in one aspect of the present invention, a lithium-ion secondary battery excellent in input-output characteristics and cycle characteristics can be provided.

DESCRIPTION OF EMBODIMENTS

Hereinafter, modes for carrying out the present invention will be described in detail. However, the present invention is not limited to the following embodiments. In the following embodiments, the constituent elements (including element steps and the like) are not essential unless otherwise specified. The same applies to numerical values and ranges thereof, and does not limit the present invention.

In the present disclosure, the term "step" includes, in addition to steps independent of other steps, such steps as long as the purpose of the step is achieved even if it cannot be clearly distinguished from other steps.

In the present disclosure, those numerical ranges that are expressed with "to" each denote a range that includes the numerical values stated before and after "to" as the minimum value and the maximum value, respectively.

In a set of numerical ranges that are stated stepwise in the present disclosure, the upper limit value or the lower limit value of a numerical range may be replaced with the upper limit value or the lower limit value of other numerical range. Further, in a numerical range stated in the present disclosure, the upper limit value or the lower limit value of the numerical range may be replaced with a value indicated in each Test.

In the present disclosure, each component may include plural kinds of substances corresponding thereto. When there are plural kinds of substances that correspond to each component in a composition, the content ratio and content of the component mean, unless otherwise specified, the total content ratio and content of the plural kinds of substances existing in the composition.

In the present disclosure, each component may include plural kinds of particles corresponding thereto. When there are plural kinds of particles that correspond to a component in a composition, the particle size of the component means, unless otherwise specified, a value determined for a mixture of the plural kinds of particles existing in the composition.

In the present specification, the term "layer" includes, in addition to the case where the region is entirely formed, that when the region where the layer is present is observed, it is formed in only a part of the region.

In the present specification, the term "layered" refers to stacking layers, two or more layers may be combined, and two or more layers may be removable.

<Anode Material for Lithium-Ion Secondary Battery>

An anode material for a lithium-ion secondary battery includes a carbon material satisfying the following (1) and (2).

> (1) D90/D10 of a particle size on a volume basis is larger than 2.0 and less than 4.3.
> (2) N/S, which is a value obtained by dividing a number N of particles with an equivalent circle diameter of 5 $\mu$m or less based on a number standard in a total number of measured particles of 10,000, by a specific surface area S determined by nitrogen adsorption measurement at 77 K, is 750 (particles $\cdot$ g/cm$^2$) or more.

The anode material for a lithium-ion secondary battery satisfies the above (1) and (2), and therefore it is possible to manufacture a lithium-ion secondary battery excellent in input-output characteristics and cycle characteristics. The reason for this is not clear, but is presumed as follows.

In the above (1), D90/D10 is more than 2.0 and less than 4.3, and thus the carbon material tends to have high fillability. Thereby, there is a tendency that the electrode density is improved and the press pressure necessary to obtain the target electrode density in an anode for a lithium-ion secondary battery is lowered when the anode material for a lithium-ion secondary battery is applied on a current collector. By lowering the press pressure, the orientation of the carbon material in the lateral direction is lowered, and lithium-ions can be easily taken in and out during charging and discharging. As a result, there is a tendency that it is possible to manufacture a lithium-ion secondary battery excellent in input-output characteristics. In particular, spherical graphite obtained by subjecting natural graphite particle to a spheroidizing treatment tends to produce a hollow particle during the spheronization process, and the hollow particle is likely to be deformed by press pressure and thus oriented in the lateral direction. On the other hand, in the anode material for a lithium-ion secondary battery, it is possible to lower the press pressure necessary to obtain the target electrode density, and thus even in a case where the carbon material included in the anode material is spherical graphite, the increase in the orientation of the carbon material in the lateral direction can be prevented.

In the above (1), D90/D10 is less than 4.3, and thus inhibition of liquid circulation in gaps between the carbon materials is prevented. Thereby, there is a tendency that it is possible to manufacture a lithium-ion secondary battery excellent in input-output characteristics and cycle characteristics.

In the above (2), a large number of particles with an equivalent circle diameter of 5 μm or less based on a number standard in a total number of measured particles of 10,000 indicates that more carbon materials have a small particle size. When the more carbon materials have a small particle size, there is a tendency that the diffusion distance of lithium-ions in the solid is short, and the output characteristics are good. Further, in the above (2), the specific surface area S increases in inverse proportion to the particle size of the carbon material, and input-output characteristics of a lithium-ion secondary battery tend to be more improved. However, an electrolysis reaction is likely to occur at an interface between the carbon material having a large specific surface area and an electrolytic solution, and current concentration is likely to be induced due to a drying up of the electrolytic solution. As a result, the lithium deposition tends to occur, and the cycle characteristics tend to deteriorate.

In the anode material for a lithium-ion secondary battery of the present disclosure, by setting N/S, which is the ratio of the number N of particles and the specific surface area S to 750 (particles · g/cm$^2$) or more, the number N of particles and the specific surface area S are preferably balanced. Thereby, it is possible to prevent the decrease in cycle characteristics of a lithium-ion secondary battery and improve input-output characteristics of the lithium-ion secondary battery.

Excellent input-output characteristics are synonymous with low resistance, and have the effect of preventing heat generation due to resistance. Therefore, by improving input-output characteristics of a lithium-ion secondary battery, it is expected to improve the high temperature storage characteristics by preventing heat generation.

Generally, in a lithium-ion secondary battery, since a carbon material repeatedly expands and contracts due to charging and discharging, the conductive path is easily broken due to interfacial peeling between the carbon material and a current collector, peeling between the carbon materials, or the like. Further, cycle characteristics of the lithium-ion secondary battery may deteriorate due to a decrease in the charge and discharge capacity caused by a deactivated anode active material and a current density increase in an effective anode active material.

On the other hand, in the anode material for a lithium-ion secondary battery, points of contact between the carbon material as an anode active material and a current collector, and between the carbon materials tend to be improved by satisfying the above (1) and (2). By using the anode material for a lithium-ion secondary battery of the present disclosure, in a case where the carbon material repeatedly expands and contracts due to charging and discharging, it is possible to manufacture a lithium-ion secondary battery in which conductive paths between the carbon material and a current collector, between the carbon materials or the like are suitable maintained. From the above, there is a tendency that it is possible to manufacture a lithium-ion secondary battery excellent in life characteristics such as cycle characteristics; input-output characteristics or the like.

[Carbon material]

The anode material for a lithium-ion secondary battery (hereinafter, also simply referred to as "anode material") includes a carbon material satisfying the above (1) and (2) (hereinafter, also referred to as "specific carbon material"). The content ratio of the specific carbon material in the anode material is not particularly limited, and for example, is preferably 50% by mass or more, more preferably 80% by mass or more, still more preferably 90% by mass or more, and particularly preferably 100% by mass.

The anode material may include a carbon material other than the specific carbon material. There is no particular restriction on such other carbon material, and examples thereof include natural graphite in a scaly, earthy, or spherical form, graphite such as artificial graphite, amorphous carbon, carbon black, fibrous carbon, and nano-carbon. Such other carbon materials may be used singly or in combination of two or more kinds thereof. Further, the anode material may include a particle containing an element that can occlude and release a lithium-ion. There is no particular restriction on such an element can occlude and release a lithium-ion, and examples thereof include Si, Sn, Ge, and In.

The specific carbon material has D90/D10 of the particle size on a volume basis is larger than 2.0 and less than 4.3.

From the viewpoint that it is possible to obtain a lithium-ion secondary battery with a high capacity retention rate and excellent cycle characteristics by making it easier to secure conductive paths between the carbon material and a current collector, between the carbon materials or the like, and from the viewpoint of improving the tap density easily, D90/D10 is preferably larger than 2.2, more preferably larger than 2.5, and still more preferably larger than 3.0.

From the viewpoint that it is possible to obtain a lithium-ion secondary battery in which inhibition of liquid circulation in gaps between the carbon materials is suitably prevented and with input-output characteristics and cycle characteristics, it is preferably less than 4.1 and more preferably less than 3.6.

The value of D90/D10 may be changed within the above range in consideration of the amount of the anode material composition applied to a current collector, the thickness of the anode, or the like.

The particle size (D10) of the carbon material is a particle size corresponding to a cumulative percentage of 10% on a cumulative volume distribution curve drawn from the small diameter side with respect to a particle size distribution of the carbon material, and the particle size (D90) of a carbon material is a particle size corresponding to a cumulative percentage of 90% on a cumulative volume distribution curve drawn from the small diameter side with respect to a particle size distribution of the carbon material. The particle size (D10) and the particle size (D90) can be measured by dispersing the carbon material in purified water containing a surfactant, and using a laser diffraction particle size distribution analyzer (for example, SALD-3000J, manufactured by Shimadzu Corporation).

The average particle size (D50) of the specific carbon material is 22 $\mu$m or less.

The average particle size (D50) of the specific carbon material is more preferably 21 $\mu$m or less, and still more preferably 20 $\mu$m or less, from the viewpoint of further improving input-output characteristics of a lithium-ion secondary battery by preventing increase in the diffusion length of a lithium-ion from the surface to the inside of the anode material.

The average particle size (D50) of the specific carbon material is preferably 10 $\mu$m or more, more preferably 12 $\mu$m or more, still more preferably 15 $\mu$m or more, and particularly preferably 17 $\mu$m or more, from the viewpoint of preventing decrease in high temperature storage characteristics of a lithium-ion secondary battery by increasing the specific surface area.

The average particle size (D50) of the carbon material is a particle size corresponding to a cumulative percentage of 50% on a cumulative volume distribution curve drawn from the small diameter side with respect to a particle size distribution of the carbon material. The average particle size (D50) can be measured by dispersing the carbon material in purified water containing a surfactant, and using a laser diffraction particle size distribution analyzer (for example, SALD-3000J, manufactured by Shimadzu Corporation).

In the specific carbon material, N/S, which is a value obtained by dividing the number N of particles with an equivalent circle diameter of 5 $\mu$m or less based on a number standard in a total number of measured particles of 10,000, by a specific surface area S determined by nitrogen adsorption measurement at 77 K, is 750 (particles·g/cm$^2$) or more.

N/S is preferably 900 or more, and more preferably 1200 or more, from the viewpoint of input-output characteristics of a lithium-ion secondary battery.

N/S may be 2000 or less, or may be 1800 or less.

In the present disclosure, the number N of particles with an equivalent circle diameter of 5 $\mu$m or less based on a number standard of the carbon material can be measured by using a wet flow particle size/shape analyzer (FPIA-3000 manufactured by Malvern Panalytical) under the same conditions as those for measuring the average circularity to be described later.

In the present disclosure, the specific surface area determined by nitrogen adsorption measurement at 77 K can be determined by using a BET method from the adsorption isotherm obtained from the nitrogen adsorption measurement at 77K.

The specific carbon material preferably satisfies the following (3):

(3) the ratio of the number of particles with an equivalent circle diameter of 5 $\mu$m or less based on a number standard with respect to a total number of measured particles of 10,000 is 45% or more.

In the specific carbon material, the aforedescribed ratio of the number of particles is preferably 45% or more, more preferably 53% or more, and still more preferably 60% or more, from the viewpoint of excellent input-output characteristics of a lithium-ion secondary battery. There is a tendency that the current density improves since the diffusion of lithium-ions in the solid becomes shorter, and an oxidation-reduction reaction interface of lithium-ions at an interface between the carbon material and an electrolyte solution increases by increasing the amount of the carbon materials with an equivalent circle diameter of 5 $\mu$m or less.

The upper limit of the aforedescribed ratio of the number of particles is not particularly limited, and is preferably 95% or less, and more preferably 90% or less, from the viewpoint of making it easier for the carbon material to satisfy the conditions of the above (1) and (2), and (5) to be described later.

The specific surface area of the specific carbon material determined by a nitrogen adsorption measurement at 77 K is preferably from 2 m$^2$/g to 14 m$^2$/g, more preferably from 3 m$^2$/g to 8 m$^2$/g, and still more preferably from 4 m$^2$/g to 6 m$^2$/g. When the specific surface area is within the above range, a favorable balance between input-output characteristics and initial charge and discharge efficiency in a lithium-ion secondary battery tends to be obtained.

From the viewpoint of more excellent input-output characteristics and cycle characteristics of a lithium-ion secondary battery, the specific carbon material preferably satisfies the following (4):

(4) when X is an equivalent circle diameter based on a number standard at a cumulative percentage of 99% of a particle size distribution limited to particle sizes of 5 $\mu$m or more, and Y is a circularity at a cumulative percentage of 1% of a circularity distribution limited to particle sizes of 5 $\mu$m or more, the following Formula (a) is satisfied:

$$\text{Formula (a): } Y \geq 0.3 \times \log_{10}(X) + (0.5 - 0.3 \times \log_{10}6).$$

The right side of the above Formula (a) is a line segment passing through two points where (particle size ($\mu$m), circularity) are (6 $\mu$m, 0.5) and (50, 0.8) (the particle size is logarithmic scale). Satisfying the above (4) means that the specific carbon material does not contain a particle having a small degree of circularity (for example, a flat shape) and a large particle size, or contains a very small amount thereof.

In the specific carbon material, $Y - [0.3 \times \log_{10}(X) + (0.5 - 0.3 \times \log_{10}6)]$ is preferably 0 or more, from the viewpoint of more excellent input-output characteristics and cycle characteristics of a lithium-ion secondary battery, may be from 0 to 0.15, or may be from 0 to 0.10.

The plane of a particle with a small circularity (for example, a flat shape) and a large particle size is likely to be aligned parallel to a plane of a current collector, and this parallel plane is perpendicular to the moving axis of of lithium ions. Therefore, a path length of lithium-ions, electrolyte, or the like that moves during charging and discharging is extended, and the general characteristics of charging and discharging are deteriorated. On the other hand, in a case where the above (4) is satisfied, the movement of lithium-ions, or electrolyte that moves through the interparticle gaps becomes smoother, and input-output characteristics and cycle characteristics of a lithium-ion secondary batteriy tend to be improved.

Since the average circularity is the average value of the circularity of individual particles and can indicate the bulk powder shape, it is effective to study it from the viewpoint of improving input-output characteristics and cycle characteristics of a lithium-ion secondary battery. Therefore, by using the specific carbon material satisfying the above (4) and the following (6), it becomes easier to obtain a lithium ion secondary battery that is particularly excellent in input-output characteristics and cycle characteristics.

In the present disclosure, in the carbon material, the equivalent circle diameter based on a number standard at a cumulative percentage of 99% of a distribution limited to particle sizes of 5 $\mu$m or more and the circularity at a cumulative percentage of 1% of a circularity distribution limited to particle sizes of 5 $\mu$m or more can be measured by a wet flow particle size/shape analyzer.

The specific carbon material preferably satisfies the following (5):

(5) the tap density is from 0.8 g/cm$^3$ to 0.95 g/cm$^3$.

From the viewpoint of superior input-output characteristics and energy density in a lithium-ion secondary battery, the tap density of the specific carbon material is preferably 0.80 g/cm$^3$ or more, more preferably 0.85 g/cm$^3$ or more, and still more preferably 0.90 g/cm$^3$ or more. From the viewpoint of superior yield of an anode and cycle characteristics of a lithium-ion secondary battery, the tap density of the specific carbon material is preferably 0.95 g/cm$^3$ or less.

The value of the tap density of the carbon material tends to be improved by increasing the average particle size of the carbon material (D50), the average circularity of the carbon material or the like, or removing the carbon material with large particle size and a flat shape.

In the present disclosure, the tap density of the carbon material means a value determined from the mass and the volume of a powder sample after charging a 100 cm$^3$ of a powder sample into a graduated flat bottom test tube with a volume of 150 cm$^3$ (KRS-406, manufactured by Kuramochi Scientific Instruments Seisakusho), closing the graduated flat bottom test tube with a stopper, and dropping the graduated flat bottom test tube 250 times from a height of 5 cm.

From the viewpoint of more excellent input-output characteristics and cycle characteristics of a lithium-ion secondary battery, the specific carbon material preferably satisfies the following (6):

(6) an average circularity is from 0.90 to 0.93.

When the average circularity is 0.90 or more, coordination of the specific carbon material parallel to a current collector plane is prevented. As a result, a path length of lithium-ions, electrolyte, or the like that moves during charging and discharging is shortened, and the movement of lithium-ions, or electrolyte that moves through the interparticle gaps becomes smoother, and input-output characteristics and cycle characteristics of a lithium-ion secondary batteriy tend to be improved.

When the average circularity is 0.93 or less, since contact between particles is prevented from becoming point contact, grain boundary peeling due to expansion and contraction accompanying charging and discharging is prevented. As a result, cycle characteristics of a lithium-ion secondary battery tend to be improved. Further, in a case where the first carbon material that is a raw material of the specific carbon material is obtained by a spheroidizing treatment, since roughness due to processing of the first carbon material is lowered, high temperature storage characteristics of a lithium-ion secondary batteriy tend to be improved, and furthermore, since it is not necessary to spheroidize it excessively, a yield during the spheroidizing treatment tends to be improved.

The average circularity of the specific carbon material is preferably from 0.90 to 0.93, and more preferably from 0.905 to 0.925.

In the present disclosure, the circularity of the carbon material can be measured with a wet flow particle size/shape analyzer.

(Average Interplanar Spacing $d_{002}$)

The average interplanar spacing $d_{002}$ determined by an X-ray diffraction method of the specific carbon material is preferably from 3.34 Å to 3.38 Å. When the average interplanar spacing $d_{002}$ is 3.38 Å or less, an initial charge and discharge efficiency and energy density in a lithium-ion secondary battery tends to be excellent.

The theoretical value of the average interplanar spacing $d_{002}$ of a graphite crystal is 3.354 Å, and as a $d_{002}$ value is closer to that value, the energy density tends to increase.

The average interplanar spacing $d_{002}$ of the carbon material may be calculated using the Bragg's equation from a diffraction peak attributable to the carbon 002 plane to appear near the diffraction angle 2θ from 24° to 27° in a diffraction profile obtained by irradiating a sample with an X-ray (CuKα line), and measuring the diffraction line with a goniometer.

A measurement of the average interplanar spacing $d_{002}$ can be performed by an X-ray diffraction method. Specifically, an anode material sample is placed in a recessed part of a sample holder made of quartz, and set on a measurement stage, and a measurement is performed using a wide angle x-ray diffraction device (manufactured by Rigaku Corporation) under the following measurement conditions.

Radiation source: CuKα line (wavelength = 0.15418 nm)
Output: 40kV, 20mA
Sampling width: 0.010°
Scanning range: from 10° to 35°
Scanning speed: 0.5°/min

The value of the average interplanar spacing $d_{002}$ of the carbon material tends to decrease, for example, by increasing the temperature of a heat treatment at the time of producing the anode material. Therefore, by adjusting the temperature of the heat treatment at the time of producing the anode material, there is a tendency that the average interplanar spacing $d_{002}$ of the carbon material can be controlled.

(R Value of Raman Spectrometry)

The R value from Raman spectrometry on the specific carbon material is preferably from 0.1 to 0.4, from the viewpoint that a lithium-ion secondary battery is excellent in the high temperature storage characteristics, is more preferably from 0.1 to 0.33, still more preferably from 0.1 to 0.3, and particularly preferably from 0.1 to 0.25. When the R value is 0.1 or more, there exist sufficient number of lattice defects in graphite used for intake and discharge of lithium-ions, so that decrease in input-output characteristics of a lithium-ion secondary battery tends to be prevented. When the R value is 0.4 or less, a decomposition reaction of an electrolytic solution is adequately prevented, so that decrease in an initial efficiency of a lithium-ion secondary battery tends to be prevented.

The R value in a Raman spectrum obtained in Raman spectrometry is defined as an intensity ratio (Id/Ig) of the intensity Id of the maximum peak near 1360 $cm^{-1}$ to the intensity Ig of the maximum peak near 1580 $cm^{-1}$. Here, the peak appearing near 1580 $cm^{-1}$ is a peak generally attributed to a graphite crystal structure, and means, for example, a peak observed in a range of from 1530 $cm^{-1}$ to 1630 $cm^{-1}$. Further, the peak appearing near 1360 $cm^{-1}$ is usually a peak attributed to an amorphous structure of carbon, and means, for example, a peak observed in a range of from 1300 $cm^{-1}$ to 1400 $cm^{-1}$.

In the present disclosure, the Raman spectrometry is performed using a Raman spectrophotometer (for example, HORIBA, Ltd., XploRA PLUS) under the following conditions in which the baseline in the obtained spectrum satisfies the following range.

- Laser wavelength: 532 nm
- Laser intensity: 100 mW or more
- Neutral density filter: 1%
- Irradiation intensity: 1mW
- Measurement range: 1000 $cm^{-1}$ to 1800 $cm^{-1}$
- Irradiation time: 30 seconds
- Irradiation area: 1 $\mu m^2$
- Baseline (D band): 1100 $cm^{-1}$ to 1470 $cm^{-1}$
- Baseline (G band): 1450 $cm^{-1}$ to 1710 $cm^{-1}$
- Cumulative number of one particle: 2 times
- Number of particles measured: 30 particles

The specific carbon material preferably does not have two or more exothermic peaks in the temperature range of from 300°C to 1000°C in a differential thermal analysis (DTA analysis) in an air stream. As a result, input-output characteristics and high temperature storage characteristics in a lithium-ion secondary battery tend to be further improved.

In this regard, the expression that the carbon material does not have two or more exothermic peaks means that there are not a plurality of distinguishable exothermic peaks in the temperature range of from 300°C to 1000°C, namely there is no or only one distinguishable exothermic peak. Herein, the expression that there are a plurality of distinguishable exothermic peaks means that there are a plurality of distinguishable exothermic peaks, which peaks are apart by at least 5°C.

In the present disclosure, a measurement by a differential thermal analysis (DTA analysis) can be performed using a simultaneous thermogravimetric and differential thermal analyzer (for example, EXSTAR TG/DTA 6200, manufactured by Seiko Instruments Inc.). Specifically, a measurement is performed in a dry air stream of 300 mL/min at a rate of temperature increase of 2.5°C/min using $\alpha$-alumina as a reference, and presence of an exothermic peak in DTA in the range of from 300°C to 1000°C is examined.

There is no particular restriction on the specific carbon material and other carbon materials (hereinafter also collectively referred to as "carbon material"), and examples thereof include graphite, low crystalline carbon, amorphous carbon, and mesophase carbon. Examples of graphite include artificial graphite, natural graphite, graphitized mesophase carbon, and graphitized carbon fiber. As the carbon material, from the viewpoint that the charge and discharge capacity of a lithium-ion secondary battery is excellent and the tap density is excellent, a spherical graphite particle is preferable, and spherical artificial graphite, spherical natural graphite, or the like is more preferable.

In addition, by using spherical graphite particles, aggregation of graphite particles can be prevented, and when graphite particles are coated with a carbon material with lower crystallinity (for example, amorphous carbon), the graphite particles may be coated favorably. Further, exposure of areas, which have been not coated with the aforedescribed carbon material, is prevented, when an anode material composition is prepared using the carbon material aggregated at the time of coating, and such aggregation of the carbon material is broken by stirring. As a result, when a lithium-ion secondary battery is produced, a decomposition reaction of an electrolytic solution on the surface of the carbon material may be prevented and decrease in an initial efficiency tends to be prevented.

The carbon material contained in the anode material may be consisting of a single kind, or two or more kinds.

The carbon material may contain a first carbon material that becomes a core of the carbon material, and a second carbon material which is present on at least part of the surface of the first carbon material and has a lower crystallinity than the first carbon material. There is no particular restriction on the first carbon material and the second carbon material, insofar as a condition that the second carbon material has a lower crystallinity than the first carbon material is satisfied, and for example they may be selected appropriately from the aforedescribed examples of carbon materials. Each of the first carbon material and the second carbon material may be consisting of a single kind, or two or more kinds.

The presence of the second carbon material on the surface of the first carbon material can be confirmed by transmission electron microscopy.

From the viewpoint of improving input-output characteristics of a lithium-ion secondary battery, the second carbon material preferably contains at least one of crystalline carbon or amorphous carbon. Specifically, it is preferably at least one kind selected from the group consisting of a carbonaceous substance obtained from an organic compound which may be changed to a carbonaceous matter by a heat treatment (hereinafter, also referred to as "precursor of the second carbon material") and a carbonaceous particle.

There is no particular restriction on the precursor of the second carbon material, and examples thereof include pitch, and an organic polymer compound. Examples of the pitch include ethylene heavy end pitch, crude oil pitch, coal tar pitch, asphalt cracking pitch, pitch produced by thermal cracking of poly(vinyl chloride) or the like, and pitch produced by polymerizing naphthalene or the like in the presence of a super strong acid. Examples of the organic polymer compound include a thermoplastic resin, such as poly(vinyl chloride), poly(vinyl alcohol), poly(vinyl acetate), and poly(vinyl butyral), and a natural substance, such as starch, and cellulose.

There is no particular restriction on the carbonaceous particle used as the second carbon material are not particularly limited, and examples thereof include particles of acetylene black, oil furnace black, ketjen black, channel black, thermal black, and amorphous graphite.

In a case where the carbon material includes the first carbon material and the second carbon material, there is no particular restriction on the content ratio of the first carbon material and the second carbon material in the carbon material. From the viewpoint of improving input-output characteristics of a lithium-ion secondary battery, the content ratio of the second carbon material with respect to the total mass of the carbon material is preferably from 0.1% by mass to 15% by mass, more preferably from 1% by mass to 10% by mass, and still more preferably from 1% by mass to 5% by mass.

When the amount of the second carbon material in the carbon material is calculated from the amount of the precursor of the second carbon material, it can be calculated by multiplying the amount of the precursor of the second carbon material by the residual carbon ratio (% by mass). The residual carbon ratio of the precursor of the second carbon material can be found by heattreating the precursor of the second carbon material alone (or in a mixture of the precursor of the second carbon material and the first carbon material at a predetermined ratio) at a temperature at which the precursor of the second carbon material can be changed to a carbonaceous matter, and calculating the ratio from the mass of the precursor of the second carbon material before the heat treatment, and the mass of the carbonaceous material derived from the precursor of the second carbon material after the heat treatment determined by a thermogravimetric analysis, or the like.

There is no particular restriction on the method of producing the anode material of the present disclosure. From the viewpoint of efficiently producing the anode material satisfying the above requirements, when the carbon material is produced using the first carbon material and the precursor of the second carbon material, it is preferable that the anode material is produced according to the following method of producing the same.

<Method of Producing Anode Material for Lithium-Ion Secondary Battery>

A method of producing an anode material for a lithium-ion secondary battery in an embodiment of the invention may include a step of producing the specific carbon material by heattreating a mixture containing a first carbon material that becomes a core of the carbon material and a precursor of a second carbon material having a crystallinity lower than the first carbon material.

According to the above method, the aforedescribed anode material can be produced efficiently.

With respect to the above method, details or preferable modes of the first carbon material, the precursor of the second carbon material, and the specific carbon material are the same as those described in the section of the anode material for a lithium-ion secondary battery.

The first carbon material is preferably a spherical graphite particle, and more preferably spherical artificial graphite, spherical natural graphite, or the like. Spherical graphite obtained by subjecting a non-spherical graphite particle such as a scaly graphite particle or the like (for example, scaly natural graphite particle) to a spheroidizing treatment may be used as the first carbon material.

Spherical graphite can be obtained by subjecting a non-spherical graphite particle such as scaly graphite particle or the like to a spheroidizing treatment under specific treatment conditions using a commercially available spheroidizing apparatus. If necessary, the spheroidizing treatment may be performed on non-spherical graphite particle such as scaly graphite particle or the like after a pulverization treatment, or the spheroidizing treatment may serve as a pulverization treatment.

The lower limit of the peripheral rotor speed during the spheroidizing treatment is preferably 65 m/min or more, and more preferably 70 m/min or more, from the viewpoint of making it easier for D90/D10 of the specific carbon material to satisfy the above (1). The upper limit of the peripheral rotor speed during the spheroidizing treatment is preferably 100 m/min or less, and more preferably 90 m/min or less, from the viewpoint of making it easier to satisfy the above (2) by adjusting the specific surface area of the specific carbon material determined by a nitrogen adsorption measurement at 77 K.

The treatment time of the spheroidizing treatment is preferably from 2.0 minutes to 7.0 minutes, and more preferably from 2.5 minutes to 6.0 minutes, from the viewpoint of making it easier for D90/D 10 of the specific carbon material to satisfy the above (1) and the above (2).

The product of the peripheral rotor speed and the treatment time during the spheroidizing treatment is preferably from 130 to 500, and more preferably from 150 to 450, from the viewpoint of making it easier for D90/D10 of the specific carbon material to satisfy the above (1) and the above (2).

From the viewpoint of preventing electrolysis of an electrolyte in a lithium-ion secondary battery and maintaining high temperature storage characteristics, it is preferable to adjust the specific surface area of the specific carbon material so that it does not become too high. From the viewpoint of preventing an increase in the specific surface area that does not depend on the particle size of the specific carbon material, it is preferable to prevent the occurrence of cracks caused by pulverization of graphite particles or the spheroidizing treatment, the occurrence of surface irregularities, or the like. Specifically, it is preferable to adjust the particle size, thickness, or the like of the graphite particles, or subject the graphite particles to the spheroidizing treatment under the conditions of the peripheral rotor speed and treatment time as described above.

The spheroidized graphite obtained by the spheroidizing treatment may be classified, and the spheroidized graphite obtained by removing fine powder may be used as the first carbon material. The classification method is not particularly limited, and Examples thereof include classification by cyclone, and classification by sieving.

The classification point is not particularly limited and may be from 1 $\mu$m to 10 $\mu$m, may be from 1 $\mu$m to 5 $\mu$m, or may be from 1 $\mu$m to 3 $\mu$m.

From the viewpoint of making it easier to satisfy the above conditions (2) and (3) by increasing the number ratio of particles with an equivalent circle diameter of 5 $\mu$m or less based on a number standard in a total number of measured particles of 10,000, the classification point may be decreased (for example, may be from 1 $\mu$m to 3 $\mu$m), the fine powder removed by classification (for example, classification by cyclone) is further sieved to remove smaller fine powder being 1 $\mu$m or less, or the like and thus to obtain by-product particles, and a mixture obtained by adding the by-product particles to the spheroidized graphite from which the fine powder has been removed may be used as the first carbon material.

The graphite particles to be subjected to the spheroidizing treatment are preferably natural graphite, which does not require graphitization power and is a cheaper material. However, conventionally, in the process of spheroidizing natural graphite, the material yield is around 30%, and since around 70% has been removed, there has been a problem that the yield is extremely low. The removed by-product graphite is mixed with resin, for example, and used as a core material for pencils, or the like. However, the recent spread of EVs has led to a rapid increase in the amount of by-product graphite, resulting in an oversupply of by-product graphite to the demand. Therefore, it is desirable to improve the material yield in the step of spheroidizing natural graphite. Natural graphite is contained in ore at about 10% by mass in, for example, the Heilongjiang region of the People's Republic of China, and ore by-products are also extremely abundant, so it is desirable to improve the yield in the process of spheroidizing natural graphite.

In the method of producing an anode material for a lithium-ion secondary battery, the classification point may be decreased (for example, may be from 1 $\mu$m to 3 $\mu$m), or the by-product particles obtained by removing smaller fine powder being 1 $\mu$m or less or the like, may be used as the first carbon material. Thereby, it is possible to improve the yield during the spheroidizing treatment. Furthermore, the specific carbon material is likely to satisfy the conditions of the above (2) and (3), and as a result, it is likely to produce a lithium-ion secondary battery with excellent input-output characteristics and high temperature storage characteristics.

The heat treatment temperature for the mixture is preferably from 950°C to 1,500°C, more preferably from 1,000°C to 1,300°C, and still more preferably from 1,050°C to 1,250°C, from the viewpoint of improving input-output characteristics of a lithium-ion secondary battery. The heat treatment temperature for the mixture may be constant throughout the heat treatment, or may be changed.

In the above method, there is no particular restriction on the content ratios of the first carbon material and the precursor of the second carbon material in a mixture before the heat treatment. From the viewpoint of improving input-output characteristics of a lithium-ion secondary battery, the content ratio of the first carbon material is preferably from 85% by mass to 99.9% by mass, more preferably from 90% by mass to 99% by mass, and still more preferably from 95% by mass to 99% by mass, with respect to the total mass of the mixture. Meanwhile, from the viewpoint of improving the input-output characteristics of a lithium-ion secondary battery, the content ratio of the precursor of the second carbon material is preferably from 0.1% by mass to 15% by mass, more preferably from 1% by mass to 10% by mass, and still more preferably from 1% by mass to 5% by mass, with respect to the total mass of the mixture.

<Anode for Lithium-Ion Secondary Battery>

An anode for a lithium-ion secondary battery of the present disclosure includes an anode material layer including the aforedescribed anode material for a lithium-ion secondary battery of the present disclosure and a current collector. The anode for a lithium-ion secondary battery may include optionally another component in addition to the anode material layer including the anode material and the current collector described above.

The anode for a lithium-ion secondary battery may be produced, for example, by kneading the anode material and a binder together with a solvent to prepare an anode material composition in a slurry form, and coating the same on a current collector to form an anode material layer; or shaping the anode material composition into a sheet form, a pellet form, or the like, and uniting the same with a current collector. Kneading can be carried out using a dispersing device, such as a stirrer, a ball mill, a super sand mill, a pressurized kneader or the like.

There is no particular restriction on the binder used for preparation of the anode material composition. Examples of the binder include a styrene-butadiene copolymer, a polymer of an ethylenic unsaturated carboxylic acid ester such as methyl acrylate, methyl methacrylate, ethyl acrylate, ethyl methacrylate, butyl acrylate, butyl methacrylate, acrylonitrile, methacrylonitrile, hydroxyethyl acrylate, and hydroxyethyl methacrylate, a polymer of an ethylenic unsaturated carboxylic acid such as acrylic acid, methacrylic acid, itaconic acid, fumaric acid and maleic acid, and a polymer compound with high ionic conductivity such as poly(vinylidene fluoride), poly(ethylene oxide), polyepichlorohydrin, polyphosphazene, and polyacrylonitrile. When the anode material composition contains the binder, its amount is not particularly restricted. The content of the binder may be, for example, from 0.5 parts by mass to 20 parts by mass with respect to 100 parts by mass of the total of the anode material and the binder.

There is no particular restriction on the solvent, insofar as it can dissolve or disperse the binder. Specific examples include an organic solvent, such as *N*-methyl-2-pyrrolidone, *N,N*-dimethylacetamide, *N,N*-dimethylformamide, and $\gamma$-butyrolactone. There is no particular restriction on the amount of the solvent, insofar as the anode material composition can be made to have a desired form such as a paste. The amount of the solvent is preferably, for example, 60 parts by mass or more and less than 150 parts by mass with respect to 100 parts by mass of the anode material.

The anode material composition may contain a thickener. Examples of the thickener include carboxymethylcellulose and a salt thereof, methylcellulose, hydroxymethylcellulose, hydroxyethylcellulose, ethylcellulose, poly(vinyl alcohol), poly(acrylic acid) and a salt thereof, alginic acid and a salt thereof, oxidized starch, phosphorylated starch, and casein. When the anode material composition contains the thickener, its amount is not particularly restricted. The content of the thickener may be, for example, from 0.1 parts by mass to 5 parts by mass with respect to 100 parts by mass of the anode material.

The anode material composition may contain an electroconductive aid. Examples of the electroconductive aid include a carbon material such as natural graphite, artificial graphite, and carbon black (acetylene black, thermal black, furnace black, or the like), an oxide to exhibit electroconductivity, and a nitride to exhibit electroconductivity. When the anode material composition contains the electroconductive aid, its amount is not particularly restricted. The content of the electroconductive aid may be, for example, from 0.5 parts by mass to 15 parts by mass with respect to 100 parts by mass of the anode material.

There is no particular restriction on the material of the current collector, and it may be selected from aluminum, copper, nickel, titanium, stainless steel, or the like. There is no particular restriction on the form of the current collector, and it may be selected from foil, perforated foil, mesh, or the like. Additionally, a porous material, such as porous metal (metal foam), and carbon paper, may be used as the current collector.

When the anode material composition is applied to the current collector to form an anode material layer, the method therefor is not particularly restricted, and a publicly known method, such as a metal mask printing method, an electrostatic coating method, a dip coating method, a spray coating method, a roll coating method, a doctor blade method, a comma coating method, a gravure coating method, or a screen printing method, may be employed. After the anode material composition is applied to the current collector, the solvent contained in the anode material composition is removed by drying. Drying may be performed, for example, using a hot air dryer, an infrared dryer, or a combination of these devices. Flatting may be performed as needed. The flatting may be performed using a method such as a flat press or a calendar roll.

When the anode material layer is formed by integrating the anode material composition shaped into a sheet form, a pellet form, or the like, with the current collector, the method for integration is not particularly restricted. For example, it can be performed with a roller, a flat press, or a combination of these means. The pressure at the time of integration is preferably, for example, from 1 MPa to 200 MPa.

<Lithium-Ion Secondary Battery>

The lithium-ion secondary battery of the present disclosure includes the aforedescribed anode for a lithium-ion secondary battery of the present disclosure (hereinafter also simply referred to as "anode"), a cathode, and an electrolytic solution.

The cathode can be obtained by forming a cathode material layer on a current collector in the same manner as the aforedescribed method of producing the anode. As the current collector, a metal or an alloy, such as aluminum, titanium, and stainless steel, in the form of a foil, a perforated foil, a mesh, or the like may be used.

There is no particular restriction on a cathode material used for forming a cathode material layer. Examples thereof include a metallic compound that can be doped or intercalated with a lithium-ion (a metal oxide, a metal sulfide, or the like), and an electroconductive polymer material. More specific examples include lithium cobaltite ($LiCoO_2$), lithium nickelate ($LiNiO_2$), lithium manganate ($LiMnO_2$), a complex oxide thereof ($LiCo_xNi_yMn_zO_2$, x + y + z = 1), a complex oxide containing an additive element M' ($LiCo_aNi_bMn_cM'_dO_2$, a + b + c + d = 1, M': Al, Mg, Ti, Zr, or Ge), a spinel type lithium manganese oxide ($LiMn_2O_4$), a lithium vanadium compound, $V_2O_5$, $V_6O_{13}$, $VO_2$, $MnO_2$, $TiO_2$, $MoV_2O_8$, $TiS_2$, $V_2S_5$, $VS_2$, $MoS_2$, $MoSs$, $Cr_3O_8$, $Cr_2O_5$, a lithiumcontaining compound, such as an olivine type $LiMPO_4$ (M: Co, Ni, Mn, and Fe), an electroconductive polymer, such as polyacetylene, polyaniline, polypyrrole, polythiophene, or polyacene, and porous carbon. The cathode materials may be used singly, or in combination of two or more kinds thereof.

There is no particular restriction on an electrolytic solution, and for example an electrolytic solution obtained by dissolving a lithium salt as an electrolytic in a nonaqueous solvent (so-called organic electrolytic solution) may be used.

Examples of the lithium salts include $LiClO_4$, $LiPF_6$, $LiAsF_6$, $LiBF_4$, and $LiSO_3CF_3$. The lithium salts may be used singly, or in combination of two or more kinds thereof.

Examples of the nonaqueous solvents include ethylene carbonate, fluoroethylene carbonate, chloroethylene carbonate, propylene carbonate, butylene carbonate, vinylene carbonate, cyclopentanone, cyclohexylbenzene, sulfolane, propane sultone, 3-methylsulfolane, 2,4-dimethylsulfolane, 3-methyl-1,3-oxazolidin-2-one, $\gamma$-butyrolactone, dimethyl carbonate, diethyl carbonate, ethyl methyl carbonate, methyl propyl carbonate, butyl methyl carbonate, ethyl propyl carbonate, butyl ethyl carbonate, dipropyl carbonate, 1,2-dimethoxyethane, tetrahydrofuran, 2-methyltetrahydrofuran, 1,3-dioxolane, methyl acetate, ethyl acetate, trimethyl phosphate, and triethyl phosphate. The nonaqueous solvents may be used singly, or in combination of two or more kinds thereof.

There is no particular restriction on the form of a cathode and an anode of a lithium-ion secondary battery. For example, it may be in a state in which a cathode and an anode, optionally as well as a separator placed between the cathode and the anode are wound up into a spiral form, or they are layered in a flat sheet form.

There is no particular restriction on the separator, and, for example, non-woven fabric, a cloth, a microporous film made from a resin, or a combination thereof may be used. Examples of a resin include one containing as a main component a polyolefin such as polyethylene or polypropylene. When the cathode and the anode are not in direct contact with each other owing to the structure of a lithium-ion secondary battery, it is not necessary to use a separator.

There is no particular restriction on the shape of a lithium-ion secondary battery. Examples thereof include a layered battery, a paper battery, a button battery, a coin battery, a layer-built battery, a cylindrical battery, and a square battery.

It is suitable for a large capacity lithium-ion secondary battery to be used for an electric vehicle, a power tool, an electric power storage device, or the like. In particular, it is suitable for a lithium-ion secondary battery to be used for an electric vehicle (EV), a hybrid electric vehicle (HEV), a plug-in hybrid electric vehicle (PHEV), or the like for which charge and discharge at a large current is required to improve acceleration performance, and braking regeneration performance.

Examples

The invention will be specifically described below by way of the following test results, provided that the invention be not limited to these test results.

[Example 1]

(Preparation of Spheroidized natural graphite)

Scaly natural graphite (produced in Heilongjiang, China) with an average particle size of 50 $\mu$m was subjected to a spheroidizing treatment using a spheroidizing treatment device (Nara Machinery Co., Ltd., Hybridization NHS-0) under the condition of a peripheral rotor speed of 75.0 m/min for 2.5 minutes to produce spheroidized natural graphite. The produced spheroidized natural graphite was subjected to cyclone classification using a cyclone classifier, setting the classification point to 1 $\mu$m.

[Example 2]

Scaly natural graphite (produced in Heilongjiang, China) with an average particle size of 50 $\mu$m was subjected to a spheroidizing treatment using a spheroidizing treatment device (Nara Machinery Co., Ltd., Hybridization NHS-0) under the condition of a peripheral rotor speed of 85.0 m/min for 3.0 minutes to produce spheroidized natural graphite. The produced spheroidized natural graphite was subjected to cyclone classification using a cyclone classifier, setting the classification point to 10 $\mu$m. By-product particles were obtained by further removing particles of 1 $\mu$m or less by sieving the particles removed by the cyclone classification. 30 parts by mass of the obtained by-product particles were mixed with 70 parts by mass of the spheroidized natural graphite (main particles in Table 1) obtained by the cyclone classification to obtain spheroidized natural graphite used for producing an anode material.

(Production of Anode Material)

An anode material was produced in the same manner as in Example 1 except that the spheroidized natural graphite obtained in Example 1 was replaced with the spheroidized natural graphite obtained in Example 2.

[Examples 3, 4, 7 and 8]

Spheroidized natural graphite was obtained in the same manner as in Example 1 except that the scaly natural graphite used in Example 1 was changed to that shown in Table 1, or the condition of a spheroidizing treatment was changed to that shown in Table 1.

(Production of Anode Material)

An anode material was produced in the same manner as in Example 1 except that the spheroidized natural graphite obtained in Example 1 was replaced with the spheroidized natural graphite obtained in Example 3, 4, 7 or 8.

[Example 5, 6 and 9]

Cyclone classification was performed and by-product particles were obtained in the same manner as in Example 2 except that the scaly natural graphite used in Example 2 was changed to that shown in Table 1, or the condition of a spheroidizing treatment was changed to that shown in Table 1. The obtained by-product particles and spheroidized natural graphite obtained by cyclone classification were mixed in the proportions shown in Table 1 to obtain spheroidized natural graphite used for producing an anode material.

(Production of Anode Material)

An anode material was produced in the same manner as in Example 2 except that the spheroidized natural graphite obtained in Example 2 was replaced with the spheroidized natural graphite obtained in Example 5, 6 or 9.

[Comparative Examples 1, 2 and 4]

Spheroidized natural graphite was obtained in the same manner as in Example 1 except that the condition of a spheroidizing treatment was changed to that shown in Table 1.

(Production of Anode Material)

An anode material was produced in the same manner as in Example 1 except that the spheroidized natural graphite obtained in Example 1 was replaced with the spheroidized natural graphite obtained in Comparative Example 1, 2 or 4.

[Comparative Example 3]

Cyclone classification was performed and by-product particles were obtained in the same manner as in Example 2 except that the condition of a spheroidizing treatment was changed to that shown in Table 1. 30 parts by mass of the obtained by-product particles were mixed with 70 parts by mass of the spheroidized natural graphite obtained by the cyclone classification to obtain spheroidized natural graphite used for producing an anode material.

Table 1 shows the spheroidizing conditions, the cyclone classification conditions, and the addition conditions of the by-product particles in each of Examples and Comparative Examples.

Regarding the anode material obtained in each of Examples and Comparative Examples, the measurement of the tap density, the measurement of D90/D10, the measurement of the average particle size, the measurement of the average circularity, the measurement of $N_2$ specific surface area, the average interplanar spacing, the R value, the exothermic peak, the measurement of the number of particles with an equivalent circle diameter of 5 $\mu$m or less and the ratio thereof, the measurement of the equivalent circle diameter based on a number standard at a cumulative percentage of 99% of a particle size distribution limited to particle sizes of 5 $\mu$m or more, and the measurement of the circularity at a cumulative percentage of 1% of a circularity distribution limited to particle sizes of 5 $\mu$m or more were carried out. The results are shown in Table 2 and Table 3.

"Boundary value of circularity obtained from measured value of equivalent circle diameter and Formula (a)" in Table 3 means the value of the right side when the equivalent circle diameter based on a number standard at a cumulative percentage of 99% is substituted in Formula (a).

[Measurement of Tap Density]

A 100 cm$^3$ of a powder sample was charged into a graduated flat bottom test tube with a volume of 150 cm$^3$ (KRS-406, manufactured by Kuramochi Scientific Instruments Seisakusho), and the graduated flat bottom test tube was closed with a stopper. The value determined from the mass and the volume of a powder sample after dropping this graduated flat bottom test tube 250 times from a height of 5 cm was regarded as the tap density. The results are shown in Table 2.

[Measurement of Average Particle Size (D50), D10, D90 and D90/D10]

0.06 g of the anode material and purified water including a surfactant (Trade name: LIPONOL T/15, produced by Lion Corporation) at a mass ratio of 0.2% were added in a test tube (12 mm $\times$ 120 mm, manufactured by Maruem Co., Ltd.) and the mixture was stirred for 20 seconds with a test tube mixer (Pasolina NS-80, manufactured by AS ONE Corporation) to obtain a liquid, in which an anode material was dispersed. The liquid was placed in a sample water tank of a laser diffraction particle size distribution analyzer (SALD-3000J, manufactured by Shimadzu Corporation). Next, the solution was circulated with a pump while applying ultrasonic waves thereto (the pump flow rate was 65% of the maximum value), and the amount of water was adjusted so that the absorbance became in a range of from 0.10 to 0.15, and the particle size (D50) at the cumulative percentage of 50% of the obtained particle size distribution was defined as the average particle size. Further, D90/D10 was determined from the particle size (D10) at the cumulative percentage of 10% of the obtained particle size distribution, and the particle size (D90) at the cumulative percentage of 90% of the obtained particle size distribution. The results are shown in Table 2.

[Measurement of Average Circularity and Circularity at Cumulative Percentage of 1% of Circularity Distribution limited to Particle Sizes of 5 $\mu$m or More]

The circularity of the anode material was measured by using a wet flow particle size/shape analyzer (FPIA-3000 manufactured by Malvern Panalytical). The average circularity that is the circularity based on a number standard at a cumulative percentage of 50% and the circularity at a cumulative percentage of 1% of a circularity distribution limited to particle sizes of 5 $\mu$m or more were determined respectively.

The measurement temperature was 25°C, the concentration of the measurement sample was 10% by mass, and the number of particles to be counted was 10,000. Water was used as a dispersing solvent.

As a pretreatment for this measurement, 0.06 g of the anode material and purified water including a surfactant (Trade name: LIPONOL T/15, produced by Lion Corporation) at a mass ratio of 0.2% were added in a test tube (12 mm $\times$ 120 mm, manufactured by Maruem Co., Ltd.), the mixture was stirred for 20 seconds with a test tube mixer (Pasolina NS-80, manufactured by AS ONE Corporation) and then stirred by ultrasonic for one minute. US102 manufactured by SND Co., Ltd. (high frequency output: 100 W, oscillation frequency: 38 kHz) was used as an ultrasonic cleaner. The results are shown in Table 2 and Table 3.

[Measurement of $N_2$ Specific Surface Area]

A $N_2$ specific surface area was calculated by a BET method based on a measurement of nitrogen adsorption by the single-point method using a fast specific surface area and pore size distribution analyzer (FLOWSORB III, manufactured by Shimadzu Corporation) at the liquid nitrogen temperature (77 K). The results are shown in Table 2.

[Average Interplanar Spacing, R Value and Exothermic Peak]

Regarding the anode material obtained in each of Examples and Comparative Examples, the average interplanar spacing, the R value and the exothermic peak were measured respectively. The results are shown in Table 2.

In table 2, the anode material obtained in each of Examples and Comparative Examples had one exothermic peak of DTA at 300°C to 1000°C.

[Measurement of Number of Particles with Equivalent Circle Diameter of 5 $\mu$m or Less and Ratio Thereof]

The number of particles with an equivalent circle diameter of 5 $\mu$m or less and the ratio thereof were measured by using a wet flow particle size/shape analyzer (FPIA-3000 manufactured by Malvern Panalytical) under the same conditions as those for measuring the average circularity. Further, from the number of particles with an equivalent circle diameter of 5 $\mu$m or less and the ratio of the total measured count number, the ratio of the number of particles with an equivalent circle diameter of 5 $\mu$m or less to the total measured count number (10000 particles in this example) was obtained. The results are shown in Table 3.

[Number of Particles with Equivalent Circle Diameter of 5 $\mu$m or Less / $N_2$ Specific Surface Area]

The number of particles with an equivalent circle diameter of 5 $\mu$m or less / $N_2$ specific surface area was determined by using the $N_2$ specific surface area and the number of particles with an equivalent circle diameter of 5 $\mu$m or less that were measured as described above. The results are shown in Table 3.

[Equivalent Circle Diameter based on Number Standard at Cumulative Percentage of 99% of Particle Size Distribution of 5 $\mu$m or More ($\mu$m)]

The equivalent circle diameter based on a number standard at a cumulative percentage of 99% of a particle size distribution limited to particle sizes of 5 $\mu$m or more ($\mu$m) was measured by using a wet flow particle size/shape analyzer (FPIA-3000 manufactured by Malvern Panalytical) under the same conditions as those for measuring the average circularity. The results are shown in Table 3.

[Calculation of Boundary Value of Circularity Obtained from Measured Value of Equivalent Circle Diameter and Formula (a)]

By substituting the equivalent circle diameter ($\mu$m) based on a number standard at a cumulative percentage of 99% of a particle size distribution of 5 $\mu$m or more measured as described above for X in the formula (a), the value of the right side in Formula (a) was calculated to obtain the boundary value of the circularity. The results are shown in Table 3.

[Difference between Circularity at Cumulative Percentage of 1% of Circularity Distribution limited to Particle Sizes of 5 $\mu$m or More and Boundary Value of Circularity]

The difference between the circularity at a cumulative percentage of 1% of a circularity distribution limited to particle sizes of 5 $\mu$m or more measured as described above and the boundary value of the circularity calculated as described above was determined. In a case where the value of the difference is 0 or more, the condition of Formula (a) is satisfied. The results are shown in Table 3.

[Table 1]

|  | Scaly graphite | | Spheroidizing conditions | | | Condition of cyclone classification | Addition of by-product | Main particles (parts by mass) | By-product particles (parts by mass) |
|---|---|---|---|---|---|---|---|---|---|
|  | Place of production | Particle size ($\mu$m) | Peripheral rotor speed (m/min) | Time (min) | Peripheral rotor speed ×Time |  |  |  |  |
| Example 1 | Produced in Heilongjiang, China | 50 | 75.0 | 2.5 | 187.5 | Classification of 1 $\mu$m or less | No |  |  |
| Example 2 | Produced in Heilongjiang, China | 50 | 85.0 | 3.0 | 255 | Classification of 10 $\mu$m or less | Yes | 70.0 | 30.0 |
| Example 3 | Produced in Madagascar | 50 | 70.0 | 6.0 | 420 | Classification of 1 $\mu$m or less | NO |  |  |
| Example 4 | Produced in Heilongjiang, China | 50 | 75.0 | 2.5 | 187.5 | Classification of 1 $\mu$m or less | No |  |  |
| Example 5 | Produced in Heilongjiang, China | 50 | 75.0 | 4.0 | 300 | Classification of 10 $\mu$m or less | Yes | 90.0 | 10.0 |
| Example 6 | Produced in Heilongjiang, China | 50 | 75.0 | 4.0 | 300 | Classification of 10 $\mu$m or less | Yes | 85.0 | 15.0 |
| Example 7 | Produced in Madagascar | 50 | 70.0 | 5.0 | 350 | Classification of 1 $\mu$m or less | No |  |  |
| Example 8 | Produced in Madagascar | 50 | 70.0 | 4.0 | 280 | Classification of 1 $\mu$m or less | No |  |  |
| Example 9 | Produced in Heilongjiang, China | 50 | 75.0 | 4.0 | 300 | Classification of 10 $\mu$m or less | Yes | 95.0 | 5.0 |
| Compartive Example 1 | Produced in Heilongjiang, China | 50 | 80.0 | 8.0 | 640 | Classification of 10 $\mu$m or less | No |  |  |

(continued)

| | Scaly graphite | | | Spheroidizing conditions | | | Condition of cyclone classification | Addition of by-product | Main particles (parts by mass) | By-product particles (parts by mass) |
|---|---|---|---|---|---|---|---|---|---|---|
| | Place of production | Particle size ($\mu$m) | Peripheral rotor speed (m/min) | Time (min) | Peripheral rotor speed ×Time | | | | | |
| Compartive Example 2 | Produced in Heilongjiang, China | 50 | 80.0 | 6.0 | 480 | Classification of 10 $\mu$m or less | No | | |
| Compartive Example 3 | Produced in Heilongjiang, China | 50 | 60.0 | 2.5 | 150 | Classification of 10 $\mu$m or less | Yes | 70.0 | 30.0 |
| Compartive Example 4 | Produced in Heilongjiang, China | 50 | 85.0 | 3.0 | 255 | Classification of 10 $\mu$m or less | No | | |

[Table 2]

| | Tap density (g/cm³) | D90/D10 | D10 (µm) | D50 (µm) | D90 (µm) | Average circularity | N₂ specific surface area (m²/g) | Average interplanar spacing (Å) | R value | Exothermic peak |
|---|---|---|---|---|---|---|---|---|---|---|
| Example 1 | 0.88 | 2.65 | 12.5 | 20.9 | 33.1 | 0.923 | 5.2 | 3.36 | 0.18 | 1.0 |
| Example 2 | 0.92 | 4.14 | 7.0 | 18.0 | 28.8 | 0.919 | 6.1 | 3.36 | 0.22 | 1.0 |
| Example 3 | 0.94 | 3.87 | 6.8 | 16.6 | 26.3 | 0.919 | 6.8 | 3.37 | 0.39 | 1.0 |
| Example 4 | 0.88 | 2.33 | 12.5 | 20.3 | 29.1 | 0.918 | 5.0 | 3.36 | 0.18 | 1.0 |
| Example 5 | 0.94 | 2.26 | 12.7 | 20.2 | 28.7 | 0.911 | 4.7 | 3.36 | 0.21 | 1.0 |
| Example 6 | 0.85 | 3.17 | 8.8 | 17.5 | 28.0 | 0.914 | 6.4 | 3.35 | 0.16 | 1.0 |
| Example 7 | 0.94 | 3.43 | 8.5 | 19.2 | 29.0 | 0.908 | 5.8 | 3.36 | 0.28 | 1.0 |
| Example 8 | 0.86 | 2.61 | 11.6 | 20.2 | 30.3 | 0.911 | 4.8 | 3.35 | 0.23 | 1.0 |
| Example 9 | 0.92 | 2.24 | 12.7 | 20.1 | 28.5 | 0.919 | 4.8 | 3.36 | 0.20 | 1.0 |
| Comparative Example 1 | 0.96 | 1.74 | 8.2 | 10.8 | 14.3 | 0.936 | 9.0 | 3.36 | 0.37 | 1.0 |
| Comparative Example 2 | 0.97 | 1.76 | 11.9 | 16.2 | 20.9 | 0.936 | 6.6 | 3.37 | 0.41 | 1.0 |
| Comparative Example 3 | 0.70 | 4.59 | 7.4 | 18.3 | 33.9 | 0.893 | 6.3 | 3.35 | 0.38 | 1.0 |
| Comparative Example 4 | 1.01 | 1.91 | 16.1 | 22.7 | 30.8 | 0.899 | 5.2 | 3.36 | 0.32 | 1.0 |

[Table 3]

| | Number of particles with equivalent circle diameter of 5 $\mu$m or less / N$_2$ specific surface area | Ratio of particles with equivalent circle diameter of 5 $\mu$m or less | Number of particles with equivalent circle diameter of 5 $\mu$m or less (number) | Equivalent circle diameter based on number standard at cumulative percentage of 99% ($\mu$m) | Circularity at cumulative percentage of 1% | Boundary value of circularity obtained from measured value of equivalent circle diameter and Formula (a) | Difference between circularity at cumulative percentage of 1% and boundary value of circularity |
|---|---|---|---|---|---|---|---|
| Example 1 | 1283 | 0.67 | 6674 | 28.4 | 0.73 | 0.70 | 0.03 |
| Example 2 | 1390 | 0.85 | 8479 | 19.2 | 0.71 | 0.65 | 0.06 |
| Example 3 | 1217 | 0.83 | 8274 | 18.5 | 0.73 | 0.65 | 0.08 |
| Example 4 | 933 | 0.47 | 4667 | 30.0 | 0.71 | 0.71 | 0.00 |
| Example 5 | 1226 | 0.58 | 5760 | 48.8 | 0.56 | 0.77 | -0.21 |
| Example 6 | 950 | 0.61 | 6081 | 54.1 | 0.54 | 0.79 | -0.25 |
| Example 7 | 1402 | 0.81 | 8130 | 46.1 | 0.57 | 0.77 | -0.20 |
| Example 8 | 1501 | 0.72 | 7207 | 54.1 | 0.58 | 0.79 | -0.21 |
| Example 9 | 779 | 0.37 | 3741 | 35.1 | 0.70 | 0.73 | -0.04 |
| Comparative Example 1 | 422 | 0.38 | 3800 | 22.7 | 0.70 | 0.67 | 0.03 |
| Comparative Example 2 | 667 | 0.44 | 4403 | 22.8 | 0.74 | 0.67 | 0.07 |
| Comparative Example 3 | 820 | 0.52 | 5169 | 30.1 | 0.71 | 0.71 | 0.00 |
| Comparative Example 4 | 603 | 0.31 | 3136 | 58.7 | 0.58 | 0.80 | -0.22 |

(Production of Lithium-Ion Secondary Battery for Evaluating Input-Output Characteristics)

Using the anode material produced in each of Examples and Comparative Examples, a lithium-ion secondary battery for evaluating the input-output characteristics was produced according to the following procedure.

First, an aqueous solution (CMC concentration: 2% by mass) of CMC (carboxymethylcellulose, product number 2200, produced by Daicel FineChem Ltd.) was added as a thickener to 98 parts by mass of the anode material such that the solid content of CMC reached 1 part by mass, and the mixture was kneaded for 10 min. Next, purified water was added such that the total solid concentration of the anode material and CMC became from 40% by mass to 50% by mass, and kneading was performed for 10 min. Subsequently, an aqueous dispersion (SBR concentration: 40% by mass) of SBR (BM400-B, Zeon Corporation), which was a styrene butadiene copolymer rubber, was added as a binder, such that the solid content of SBR reached 1 part by mass, and mixing was performed for 10 min to produce a paste-like anode material composition. Next, the anode material composition was coated on an 11 $\mu$m-thick electrolytic copper foil with a comma coater, in which the clearance was adjusted to the coating amount per unit area of 10.0 mg/cm$^2$, to prepare an anode material layer. Then the electrode density was adjusted to 1.3 g/cm$^3$ with a hand press. The electrolytic copper foil on which the anode material layer was formed was punched out into a disk shape having a diameter of 14 mm to produce a sample electrode (anode).

The produced sample electrode (anode), a separator, and a counter electrode (cathode) were put into a coin-battery container in this order, and then an electrolytic solution was added to produce a coin-type lithium ion secondary battery. As the electrolytic solution, a solution prepared by adding vinylene carbonate (VC) to a mixed solvent of ethylene carbonate (EC) and ethyl methyl carbonate (EMC) (volume ratio of EC and EMC is 3:7) in an amount of 0.5% by mass with respect to the total amount of the mixed solution to give a LiPF$_6$ concentration of 1 mol/L was used. As the counter electrode (cathode), metallic lithium was used. As the separator, a polyethylene microporous membrane having a thickness of 20 $\mu$m was used. Using the produced lithium-ion secondary battery, the initial charge and discharge characteristics and the output characteristics (DCR) were evaluated according to the following methods.

[Evaluation of Input-output Characteristics]

(Evaluation of Initial Charge and Discharge Characteristics)

The produced lithium-ion secondary battery was charged by performing constant current charging at a current value of 0.2 C to a voltage of 0 V (V vs. Li/Li$^+$), and then by performing constant voltage charging at a voltage of 0 V until the current value reached 0.02 C. The capacity at this time was defined as the initial charge capacity.

Next, after a pause of 30 min, constant current discharging was performed at a current value of 0.2 C to a voltage of 1.5 V (V vs. Li/Li$^+$). The capacity at this time was defined as the initial discharge capacity.

The results are shown in Table 4.

In this regard, "C" used as a unit of current value means "current value (A)/battery capacity (Ah)".

The output density of the lithium-ion secondary battery was determined by measuring the direct current resistance (DCR) of this battery. Specifically, it is as follows.

The results are shown in Table 4.

(Measurement of Initial DCR at 25°C)

The above lithium-ion secondary battery was put into a constant temperature chamber set at 25°C, and a cycle of charging and discharging was performed under the conditions of chargeing: CC/CV 0.2 C 0 V, 0.02 C cut, and discharging: CC 0.2 C, 1.5 V cut.

Next, constant current charging was performed at a current value of 0.2 C to SOC 50%.

In addition, the above lithium-ion secondary battery was put into a constant temperature chamber set at 25°C, and constant current charging was performed under the respective conditions of 1 C, 3 C, and 5 C for 10 sec each, and the voltage drop ($\Delta$V) at each constant current was measured, and a direct current resistance (DCR) was calculated according to the following Formula.

$$\text{DCR } [\Omega] = [(3 \text{ C voltage drop } \Delta V - 1 \text{ C voltage drop } \Delta V) + (5 \text{ C voltage drop } \Delta V - 3 \text{ C voltage drop } \Delta V)]/4$$

(Production of Lithium-Ion Secondary Battery for Evaluating Cycle Characteristics)

Using the anode material produced in each of Examples and Comparative Examples, a lithium-ion secondary battery for evaluating the cycle characteristics was produced according to the following procedure.

First, 7 mass of SiO coated with carbon (heat treatment temperature: 1000°C, carbon coating amount: 5% by mass) was added to 93 parts by mass of the anode material produced in each of Examples and Comparative Examples and then the mixture was mixed for 10 minutes to obtain an anode active material.

An aqueous solution (CMC concentration: 2% by mass) of CMC (carboxymethylcellulose, DKS Co. Ltd., Serogen WS-C) was added as a thickener to 98 parts by mass of the produced anode material such that the solid content of CMC reached 1 part by mass, and the mixture was kneaded for 10 min. Next, purified water was added such that the total solid concentration of the anode material and CMC became from 40% by mass to 50% by mass, and kneading was performed for 10 min. Subsequently, an aqueous dispersion (SBR concentration: 40% by mass) of SBR (BM400-B, Zeon Corporation), was added as a binder, such that the solid content of SBR reached 1 part by mass, and mixing was performed for 10 min to produce a paste-like anode material composition. Next, the anode material composition was coated on an 11 $\mu$m-thick electrolytic copper foil with a comma coater, in which the clearance was adjusted to the coating amount per unit area of 10.0 mg/cm$^2$, to prepare an anode material layer. Then the electrode density was adjusted to 1.65 g/cm$^3$ with a roll press. The electrolytic copper foil on which the anode material layer was formed was punched out so that it was 4.0 cm $\times$ 3.0 cm to produce a sample electrode (anode).

As a cathode, the cathode made of NMC was cut out in the same area, and a separator (made of porous polyethylene film) was placed between the anode and the cathode to combine them. As the electrolytic solution, a solution prepared by adding vinylene carbonate (VC) in an amount of 0.5% by mass and fluoroethylene carbonate (FEC) in an amount of 1.0% by mass to a mixed solvent of ethylene carbonate (EC) and ethyl methyl carbonate (EMC) (volume ratio of EC and EMC is 3:7) with respect to the total amount of the mixed solution to give a LiPF$_6$ concentration of 1 mol/L was used.

[Evaluation of Cycling Characteristics]

In each of Examples and Comparative Examples, using the lithium-ion battery produced as described above, the cycling characteristics were evaluated as follows.

First, constant current charging was performed at 25°C with a current value of 0.2 C and a charging final voltage of 4.2 V, and when the voltage reached 4.2 V, constant voltage charging was performed at this voltage until the current value reached 0.02 C. After a pause of 30 min, constant current discharging was performed twice at 25°C with a current value of 0.2 C to a final voltage of 2.7 V, and an aging treatment was performed. Then, under the condition of the above charging and discharging, after performing 1 cycle charging and discharging, a total of 100 cycles of the cycle test was performed by performing 99 cycles of the cycle test with a current value set to 1.0 C.

The discharge capacity retention rate (%) after 100 cycles was calculated from the following Formula. The results are shown in Table 4.

$$\text{Discharge capacity retention rate (\%)} = (\text{Discharge capacity after 100 cycles})/(\text{Discharge capacity at 1st cycle}) \times 100$$

[Evaluation of injectability]

The anode for the above cycle characteristics evaluation was prepared, and the electrode density was adjusted to 1.65 g/cm$^3$ by a roll press. The pressed anode was punched out into a circle of 16$\varphi$, which was attached to a glass substrate with a double-faced tape to form a planar electrode surface without distortion. Using a micropipette, 3 $\mu$L of PC (polycarbonate: manufactured by Kishida Chemical Co., Ltd.) was dripped onto the center of the circular electrode, and the injection time until permeation was measured. Three same electrodes were prepared, and the average value of three measurements was determined. The result are shown in Table 4.

(Production of Lithium-Ion Secondary Battery for Evaluating Electrode Orientation)

An anode for a lithium-ion secondary battery was produced in the same manner as in the above (Production of Lithium-Ion Secondary Battery for Evaluating Input-Output Characteristics) and electrode orientation was evaluated under the following condition.

[Evaluation of Electrode Orientation]

The anode for a lithium-ion secondary battery thus obtained was molded into a stripshaped sheet having a width of 5 cm and an area of 600 cm$^2$, and the obtained molding was pressed with a roll-type pressing machine under hydraulic pressure of 4 tons. The linear pressure at this time was 4t/5cm=0.8t/cm. The pressed anode was placed in an X-ray diffraction measurement cell, and an X-ray diffraction measurement device (X-ray diffraction measurement device X-RAY DIFFRACTIOMETER MultiFlex manufactured by Rigaku corporation) was used, an X-ray diffraction pattern using CuKα rays was measured under the conditions of a scanning speed of 0.25°/min, a tube voltage of 40 kV, a tube current of 30 mA, a divergence slit of 1°, a scattering slit of 1°, and a receiving slit of 0.3 mm (2θ=25.5°-27.5°, 76.5°-78.5°). $I_{002}/I_{110}$, which is the obtained ratio of the peak intensity of the 002 diffraction line ($I_{002}$) and the peak intensity of the 110 diffraction line ($I_{110}$), was obtained, and this value was regarded as the electrode orientation. The result are shown in Table 4.

[Evaluation of High Temperature Storage Retention Rate]

As step 1, a lithium-ion secondary battery produced in the same manner as in the above (Production of Lithium-Ion Secondary Battery for Evaluating Input-Output Characteristics) was put into a constant temperature chamber set at 25°C, and constant current charging was performed at a current value of 0.2 C to a voltage of 0 V (V vs. Li/Li$^+$), and then constant voltage charging was performed at 0 V until the current value reached 0.02 C. Next, after a pause of 30 min, constant current discharging was performed at a current value of 0.2 C to a voltage of 1.5 V (V vs. Li/Li$^+$). This charging and discharging was repeated twice, then constant current charging was performed at a current value of 0.2 C to a voltage of 0 V (V vs. Li/Li$^+$), and then constant voltage charging was performed at a voltage of 0 V until the current value reached 0.02 C. The battery was placed in a constant temperature chamber set at 60°C, and stored for 7 days.

Thereafter, as step 2, the lithium-ion secondary battery was placed in a constant temperature chamber set at 25°C, left standing for 60 min, and constant current discharging was performed at a current value of 0.2 C to a voltage of 1.5 V (V vs. Li/Li$^+$). Then, charging and discharging was repeated once under the above conditions. This storage at 60°C (step 1) and capacity confirmation after storage (step 2) were repeated a total of three times.

The high temperature storage retention rate was calculated from the following Formula and the arithmetic average value was regarded as the high temperature storage characteristics (%).

$$\text{High temperature storage retention rate (\%)} = (\text{first discharge capacity at 25°C after storage at 60°C for 21 days})/(\text{second discharge capacity at 25°C before storage at 60°C}) \times 100$$

[Table 4]

| | D50 (μm) | Average circularity | $N_2$ specific surface area (m²/g) | D90/D10 | Number of particles with equivalent circle diameter of 5 μm or less /$N_2$ specific surface area | Electrode orientation | Injection time (sec) | DCR (Ω) | Discharging capacity (Ah/kg) | High temperature storage characteristics (%) | Cycle retation rate (%) |
|---|---|---|---|---|---|---|---|---|---|---|---|
| Example 1 | 20.9 | 0.923 | 5.2 | 2.65 | 1283 | 647 | 1092 | 11 | 431 | 81.7 | 85 |
| Example 2 | 18.0 | 0.919 | 6.1 | 4.14 | 1390 | 767 | 837 | 10.7 | 422 | 78.6 | 82 |
| Example 3 | 16.6 | 0.919 | 6.8 | 3.87 | 1217 | 986 | 1232 | 10.3 | 434 | 75.2 | 83 |
| Example 4 | 20.3 | 0.918 | 5.0 | 2.33 | 933 | 798 | 941 | 11.4 | 434 | 82.2 | 85 |
| Example 5 | 20.2 | 0.911 | 4.7 | 2.26 | 1226 | 685 | 738 | 10.9 | 435 | 82.8 | 86 |
| Example 6 | 17.5 | 0.914 | 6.4 | 3.17 | 950 | 1428 | 1333 | 11.2 | 425 | 78.8 | 82 |
| Example 7 | 19.2 | 0.908 | 5.8 | 3.43 | 1402 | 1176 | 944 | 10.5 | 427 | 80.2 | 85 |
| Example 8 | 20.2 | 0.911 | 4.8 | 2.61 | 1501 | 985 | 1310 | 10.7 | 430 | 82.5 | 86 |
| Example 9 | 20.1 | 0.919 | 4.8 | 2.24 | 779 | 823 | 1288 | 11.2 | 425 | 82.7 | 83 |
| Comparative Example 1 | 10.8 | 0.936 | 9.0 | 1.74 | 422 | 532 | 525 | 10.5 | 418 | 67.5 | 68 |
| Comparative Example 2 | 16.2 | 0.936 | 6.6 | 1.76 | 667 | 615 | 695 | 11.4 | 421 | 74.4 | 74 |
| Comparative Example 3 | 18.3 | 0.893 | 6.3 | 4.59 | 820 | 2008 | 2383 | 11.8 | 422 | 75.7 | 76 |
| Comparative Example 4 | 22.7 | 0.899 | 5.2 | 1.91 | 603 | 1143 | 1327 | 12.1 | 425 | 79.5 | 79 |

Comparing Example 2 and Comparative Example 3, D50 was about 18 $\mu$m and the $N_2$ specific surface area was about 6 $m^2$/g and the values were almost the same, but in Example 2, the DCR during charging was low and improved. Since the average circularity of Example 2 is higher than that of Comparative Example 3, it is considered that the effect of the average circularity improved the DCR result. However, also comparing Comparative Example 2 in which the average circularity was higher and D50 was lower, it was shown that the input characteristics could not be sufficiently improved only with a small D50, a large $N_2$ specific surface area, and a high average circularity.

As a result of keen examination, it was found that increasing the number of particles with an equivalent circle diameter of 5 $\mu$m or less and adjusting the composition of coarse powder and fine powder to make D90/D10 within a specific range improved the input characteristics of the lithium-ion secondary battery. It is considered that by increasing the number of particles with an equivalent circle diameter of 5 $\mu$m or less, there are a large number of particles with short diffusion distances in the solid for each particle, and these particles also serve as conductors between other particles. Thereby, it is considered that the current flow at the anode was dispersed and the resistance was lowered, and not only good input characteristics but also good cycle characteristics were obtained. Furthermore, an increase in the number of particles with an equivalent circle diameter of 5 $\mu$m or less/$N_2$ specific surface area, which is the number of particles with an equivalent circle diameter of 5 $\mu$m or less per unit $N_2$ specific surface area means improving electrical conductivity and shortening the diffusion distance in the solid without increasing the reaction area of the anode material with the electrolyte. As a result, it is considered that better cycle characteristics were obtained since the electrolytic solution was consumed less than when the $N_2$ specific surface area was increased by simply increasing the number of particles with an equivalent circle diameter of 5 $\mu$m or less.

When D90/D10 is within a specific range, the curved path length, which is the distance from one surface in the thickness direction to the other surface through the gaps inside the anode material layer, does not become too long, and the liquid circulation tend to be good. As a result, regions where the electrolytic solution and the anode material cannot contact each other are less likely to occur, and favorable cycle characteristics are likely to be maintained.

On the other hand, when D90/D10 is larger than the specific value, particles having a large particle diameter lengthen the curved path length and the liquid circulation deteriorates. For example, Comparative Example 3 had the longest liquid injection time and the highest electrode orientation compared to each of Examples and Comparative Examples, and therefore it is considered that the curved path length was longer. Comparative Example 3, the number of particles with an equivalent circle diameter of 5 $\mu$m or less/$N_2$ specific surface area, which contributes to the cycle characteristics, was larger than that in Example 9, but since the injection time was long, and therefore it is considered that the cycle characteristics were inferior to those of Example 9.

All the literature, patent application, and technical standards cited herein are also herein incorporated to the same extent as provided for specifically and severally with respect to an individual literature, patent application, and technical standard to the effect that the same should be so incorporated by reference.

**Claims**

1. An anode material for a lithium-ion secondary battery, the anode material comprising a carbon material satisfying the following (1) and (2):

   (1) D90/D10 of a particle size on a volume basis is larger than 2.0 and less than 4.3;
   (2) N/S, which is a value obtained by dividing a number N of particles with an equivalent circle diameter of 5 $\mu$m or less based on a number standard in a total number of measured particles of 10,000, by a specific surface area S determined by nitrogen adsorption measurement at 77 K, is 750 (particles $\cdot$ g/cm$^2$) or more.

2. The anode material for a lithium-ion secondary battery according to claim 1, wherein the carbon material satisfies the following (3):
   (3) a ratio of a number of particles with an equivalent circle diameter of 5 $\mu$m or less based on a number standard with respect to a total number of measured particles of 10,000 is 45% or more.

3. The anode material for a lithium-ion secondary battery according to claim 1 or 2, wherein the carbon material satisfies the following (4):
   (4) when X is an equivalent circle diameter based on a number standard at a cumulative percentage of 99% of a particle size distribution limited to particle sizes of 5 $\mu$m or more, and Y is a circularity at a cumulative percentage of 1% of a circularity distribution limited to particle sizes of 5 $\mu$m or more, the following Formula (a) is satisfied:

$$\text{Formula (a): } Y \geq 0.3 \times \log_{10}(X) + (0.5 - 0.3 \times \log_{10} 6).$$

4. The anode material for a lithium-ion secondary battery according to any one of claims 1 to 3, wherein the carbon material satisfies the following (5):
(5) a tap density is from 0.8 $g/cm^3$ to 0.95 $g/cm^3$.

5. The anode material for a lithium-ion secondary battery according to any one of claims 1 to 4, wherein the carbon material satisfies the following (6):
(6) an average circularity is from 0.90 to 0.93.

6. The anode material for a lithium-ion secondary battery according to any one of claims 1 to 5, wherein an average interplanar spacing $d_{002}$ determined by an X-ray diffraction method of the carbon material is from 3.34 Å to 3.38 Å.

7. The anode material for a lithium-ion secondary battery according to any one of claims 1 to 6, wherein an R value from Raman spectrometry on the carbon material is from 0.1 to 0.4.

8. The anode material for a lithium-ion secondary battery according to any one of claims 1 to 7, wherein a specific surface area determined by nitrogen adsorption measurement at 77 K of the carbon material is 14 $m^2/g$ or less.

9. The anode material for a lithium-ion secondary battery according to any one of claims 1 to 8, wherein the carbon material does not have two or more exothermic peaks in a temperature range of from 300°C to 1000°C in a differential thermal analysis in an air stream.

10. An anode for a lithium-ion secondary battery, comprising an anode material layer including the anode material for a lithium-ion secondary battery according to any one of claims 1 to 9, and a current collector.

11. A lithium-ion secondary battery, comprising the anode for a lithium-ion secondary battery according to claim 11, a cathode, and an electrolytic solution.

**INTERNATIONAL SEARCH REPORT**

| International application No. |
|---|
| PCT/JP2021/014523 |

| A. CLASSIFICATION OF SUBJECT MATTER |
|---|
| H01M 4/587(2010.01)i; H01M 10/0566(2010.01)i<br>FI: H01M4/587; H01M10/0566 |
| According to International Patent Classification (IPC) or to both national classification and IPC |

| B. FIELDS SEARCHED |
|---|
| Minimum documentation searched (classification system followed by classification symbols)<br>H01M4/587; H01M10/0566 |

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| A | JP 2015-53184 A (TOYOTA MOTOR CORP) 19 March 2015 (2015-03-19) claim 1, table 1 | 1-11 |
| A | WO 2018/207896 A1 (HITACHI CHEMICAL CO LTD) 15 November 2018 (2018-11-15) examples 9-11 | 1-11 |
| A | WO 2020/137909 A1 (SHOWA DENKO KK) 02 July 2020 (2020-07-02) example 1 | 1-11 |
| A | WO 2015/152090 A1 (KUREHA CORP) 08 October 2015 (2015-10-08) table 1, comparative example 2 | 1-11 |
| A | WO 2021/005689 A1 (SHOWA DENKO MAT CO LTD) 14 January 2021 (2021-01-14) table 1, example 1 | 1-11 |
| A | JP 2003-109592 A (SANYO ELECTRIC CO LTD) 11 April 2003 (2003-04-11) claim 1, paragraph [0008] | 1-11 |

☐ Further documents are listed in the continuation of Box C.       ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>09 June 2021 (09.06.2021) | Date of mailing of the international search report<br>22 June 2021 (22.06.2021) |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

| INTERNATIONAL SEARCH REPORT | | International application No. |
|---|---|---|
| Information on patent family members | | PCT/JP2021/014523 |

| Patent Documents referred in the Report | Publication Date | Patent Family | Publication Date |
|---|---|---|---|
| JP 2015-53184 A | 19 Mar. 2015 | (Family: none) | |
| WO 2018/207896 A1 | 15 Nov. 2018 | US 2021/0135220 A1 test 9-11 WO 2018/207333 A1 WO 2018/207410 A1 CN 110892571 A TW 201902013 A TW 201902014 A CN 110612626 A KR 10-2019-0141172 A | |
| WO 2020/137909 A1 | 02 Jul. 2020 | (Family: none) | |
| WO 2015/152090 A1 | 08 Oct. 2015 | US 2017/0149062 A1 table 1, comparative example 2 EP 3131144 A1 CN 106165162 A KR 10-2016-0129863 A TW 201543740 A | |
| WO 2021/005689 A1 | 14 Jan. 2021 | (Family: none) | |
| JP 2003-109592 A | 11 Apr. 2003 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H4370662 A
- JP H5307956 A
- WO 2012015054 A